# EUROPEAN PATENT APPLICATION

(11) **EP 2 485 390 A2**
(43) Date of publication of application: **08.08.2012**
(21) Application number: 12150777.6
(22) Date of filing: 11.01.2012
(51) Int. Cl.: H02P 27/08, H02P 6/00, H02P 6/14

(54) **Driving apparatus of sensorless brushless motor**

(30) Priority: 08.02.2011 JP 2011025170
(71) Applicant: Aisin Seiki Kabushiki Kaisha, Aichi 448-8650 (JP)
(72) Inventor: Otokawa, Masaya, Kariya-shi, Aichi 448-8650 (JP); Saiki, Koichi, Kariya-shi, Aichi 448-8650 (JP); Eihata, Koma, Kariya-shi, Aichi 448-8650 (JP)
(74) Representative: Kramer - Barske - Schmidtchen

(57) **Abstract**

A driving apparatus (1, 10, 11) of a sensorless brushless motor (9, 90) includes an inverter circuit (2) supplying a power supply voltage (Vcc), of which duty ratios (A) is variably controlled by a pulse-width modulation method, a PWM generator circuit (5, 50) generating a pulse-width modulation signal (SP), a position detection circuit (3, 30) operating at a predetermined phase of the pulse-width modulation signal (SP) and detecting a rotational position of the rotor (100), and an inverter control circuit (4) transmitting an energization control signal (SC) determined based on the pulse-width modulation signal (SP) to the inverter circuit (2). The PWM generator circuit (5, 50) provides a stepwise increase and decrease of a pulse-width modulation frequency in a normal PWM frequency (fN), a low-speed PWM frequency (fL), and a high-speed PWM frequency (fH) in response to an increase and decrease of one of following parameters; the commanded duty ratio (Ar), the commanded number of rotations of the motor (Nr), a detected duty ratio (Am), and a detected number of rotations of the motor (Nm).

## Description

### TECHNICAL FIELD

This disclosure generally relates to a driving apparatus of a sensorless brushless motor.

### BACKGROUND DISCUSSION

As one type of a direct current brushless motor, a known sensorless-type motor, which is not provided with a sensor detecting a rotational position of a rotor for a cost reduction reason, is practically in use. The known sensorless brushless motor is provided with a position detection circuit for detecting a rotational position of the rotor relative to a pair of magnetic poles of the rotor by detecting an induced voltage generated at a terminal of an armature winding of a stator of the motor. On the basis of the detected rotational position of the rotor, a power supply control device determines an energization time zone where a power supply voltage is supplied to the armature winding. A power supply circuit, which is typically configured by an inverter circuit, supplies the power supply voltage to the armature winding in accordance with the determined energization time zone so that the armature windings is energied. A motor having three-phase armature windings often employs a driving method where the phase terminals are sequentially energized in turn at a pitch of an electrical angle of 120-degrees in accordance with the rotational position of the rotor. In this driving method, energization time zone may exceeded the electrical angle of 120-degrees and may be overlapped with plural phases. In addition in most cases, the power supply circuit is controlled by a signal generated by pulse-width modulation (or abbreviated as PWM from here after), the signal generated by a PWM generator circuit, so that a duty ratio is variable in order to adjust an output torque.

The induced voltage, which is detected by the position detection circuit as described above, is generated by a magnetic flux interlinkage between the pair of magnetic poles of the rotor and the armature winding that is in a non-energization time zone. As the position of the induced voltage induced changes in accordance with a relative rotational position of the armature winding and the rotor, the induced voltage is considered as an index for detecting the rotational position of the rotor. The phase at which the induced voltage is induced sequentially changes as the terminals are sequentially energized in turn. As a circuit system for detecting the induced voltage, a three-phase combined type circuit system and a three-phase independent type circuit system are conventionally applied. Generally, in both circuit systems, the induced voltage is compared to a reference voltage by means of a comparator and a reference rotational position of the rotor is detected at a timing when the comparison result changes. An intermediate level value, which is half the value of the power supply voltage, or a neutral point voltage of the armature windings connected to one another in a Y-connection is applied as the reference voltage.

An example of the driving apparatus of the above-described type, which is applied to a sensorless brushless motor, is disclosed in JPH11-32498A. The driving apparatus of the sensorless brushless motor and the control method disclosed in JPH11-32498A rectifies an alternating-current source by means of a rectifier and a voltage doubler to obtain a direct-current voltage, which is applied to the brushless motor with a switch by means of an inverter being driven by a PWM chopping. At least at the time of startup and during the low-speed operation, the voltage doubler is switched off and the PWM chopping is changed to a predetermined duty at the same time, so that the rotational position of the rotor is detected without a fail during a mode without voltage doubler is used by prolonging an on-duty period of the PWM chopping.

An example of a speed control apparatus, which is applied to a brushless motor using a direct-current source, is disclosed in JPH8-23694A. The speed control device disclosed in JPH8-23694A, which is equipped with a motor speed detecting device and a PWM control device that changes a length of energization period for adjusting the motor speed, controls the motor rotation by automatically changing PWM frequencies in response to a motor speed, so that the PWM frequency is varied automatically and continuously according to the motor speed, to provide a stable speed control in a wide range from low-speed to high-speed.

In a sensorless brushless motor, in case that a rotational speed of the rotor is controlled to be low, the duty ratio of a PWM control is controlled to be small, a duration of time in which the induced voltage is induced at the terminal becomes small so as to coincide with the on-duty period. Accordingly, the comparison result outputted from the comparator of the position detection circuit also includes an intermittent waveform. The timing at which the output from the comparator is read out in the position detection circuit is normally a falling phase of the pulse-width modulation signal, that is, a time of completion of the on-duty period. The reason is because an inverter control circuit and an inverter circuit include a transmission delay time, and thus the above-described timing is appropriate for reading out the changes in the output, which occurs at the comparator during the on-duty period that delays by the transmission delay time. The rotational position is no longer detected in case that the duty ratio extremely decreases at a low-speed range, that is when the on-duty period becomes shorter than the transmission delay time. The reason is because an entire duration of the on-duty period at the comparator is delayed and comes after the falling phase of the pulse-width modulation signal, and there exists substantially no timing at which the output of the comparator is read out in the position detection circuit.

To accommodate the difficulties of detecting a rotational position at low-speed, prolonging the ON-period of the duty of the PWM chopping by switching to a voltage doubler mode at low-speed as disclosed wtih the driving apparatus of the sensorless brushless motor disclosed in JPH11-32498A is effective. The apparatus disclosed in JPH11-32498A is based on having an alternating-current source to apply voltage doubler means. As a result, the method used in JPH11-32498A is not applicable to the sensorless brushless motor driven by a battery or other direct-current source.

In case that a rotational speed of the rotor is controlled to be high, the duty ratio of a PWM control is controlled to be large. As a result, there is no problem of unable in detecting the rotational position due to the timing of the changes in the comparator output being off with the timing at which the output from the comparator is read out, however another problem arises. An amount of rotational angle corresponding to one PWM frequency cycle increases at a high-speed range. Using a constant PWM frequency at the high-speed range with a position detection method that operates at a predetermined phase of a PWM signal causes the timing for detecting the rotational position to be delayed, which results with a detected position with an increased measurement error. In an extreme case, the measurement error is nearly one whole rotational angle. The apparatus disclosed in JPH11-32498A is not effective as a solution to the problem of the rotational position detection error increasing at the high-speed range, which causes controlling the motor at high-speed range difficult.

The speed control device disclosed in JPH8-23694A varies the PWM frequency according to the detected motor speed automatically and continuously with a motor speed detecting device, which is effective to the aforementioned problems that exist at both the low-speed range and the high-speed range. Having the motor speed detecting device means having a type of rotational position detecting sensor. The design of a circuit that provides the PWM frequency, which varies automatically and continuously, is complex. As a result, the speed control device disclosed in JPH8-23694A is bound to have a high cost and is unsuitable for providing a low cost driving apparatus of a sensorless brushless motor.

A need thus exists for a driving apparatus of a sensorless brushless motor that holds down the increase of cost, that detects the rotational position of the rotor with accuracy in a wide range from low-speed to high-speed to provide a comfortable control of driving a motor, and further increases a drive and control range to a wider range than a conventional motor.

### SUMMARY

According to an aspect of the disclosure, a driving apparatus of a sensorless brushless motor includes an inverter circuit supplying a power supply voltage, of which duty ratios is variably controlled by a pulse-width modulation method, to three-phase terminals of three-phase armature windings of the sensorless brushless motor provided with a stator including the three-phase armature windings and with a rotor including a pair of magnetic poles. The driving apparatus of the sensorless brushless motor also includes a PWM generator circuit which generates a pulse-width modulation signal including the duty ratio corresponding to a commanded duty ratio or corresponding to a commanded number of rotations of the motor, a position detection circuit operating at a predetermined phase of the pulse-width modulation signal, detecting an induced voltage induced at the three-phase terminals in a non-energization time zone in which the power supply voltage is not supplied from the inverter circuit to the three phase terminals and detecting a rotational position of the rotor on the basis of the induced voltages, and an inverter control circuit which determines an energization time zone in which the power supply voltage is supplied to each of the three-phase terminals on the basis of the rotational position of the rotor detected by the position detection circuit and transmitting an energization control signal, which is determined on the basis of a setting of the energization time zone and of the pulse-width modulation signal, to the inverter circuit. The PWM generator circuit provides a stepwise increase and decrease of a pulse-width modulation frequency in response to an increase and decrease of one of following parameters; the commanded duty ratio, the commanded number of rotations of the motor, a detected duty ratio, and a detected number of rotations of the motor.

The PWM generator circuit of the driving apparatus of the sensorless brushless motor provides the stepwise increase and decrease of the PWM (pulse-width modulation) frequency in response to the increase and decrease of the one of following parameters that is commanded duty ratio, the commanded number of rotations of the motor, the detected duty ratio, and the detected number of rotations of the motor . When the rotational speed of the rotor is low and the duty ratio is small, the PWM frequency is decreased and one cycle is made longer, so that an on-duty period does not greatly change, so that the position detection circuit is provided with a timing to read an output of a comparator without being affected by a transmission delay time through a system. As a result, the position of the rotor is detected with high accuracy in a low-speed region to provide the more comfortable control and the drive of the rotor, so that the rotor is controlled and driven to a further low rotational speed. When the rotational speed of the rotor is high, the PWM frequency is increased and one cycle is made shorter, so that the position detection circuit is provided with more timings to read the output of the comparator to reduce delay in detecting the rotor position. As a result, the position of the rotor is detected with high accuracy in a high-speed region to provide the more comfortable control and drive of the rotor, so that the rotor is controlled and driven to a further high rotational speed.

According to the further aspect of the disclosure, the driving apparatus of the sensorless brushless motor also includes the PWM generator circuit which provides a normal PWM frequency, which is the pulse width modulation frequency used in a normal state, and a low-speed PWM frequency with a lower frequency compared to the normal PWM frequency. The normal PWM frequency is switched to the low-speed PWM frequency when the one of the parameters is reached equal to and decreased under a low-speed transition threshold, and the low-speed PWM frequency is switched to the normal PWM frequency when the one of the parameters is reached equal to and increased over a low-speed relief threshold.

The PWM generator circuit switches the PWM frequency to and from between the normal PWM frequency and the low-speed PWM frequency according to the rotational speed of the rotor. When the rotational speed of the rotor is low and the duty ratio is small, one cycle of the PWM frequency is made longer with an usage of the low-speed PWM frequency, so that the on-duty period does not greatly change to a smaller value, so that the position detection circuit is provided with the timing to read the output of the comparator without being affected by the transmission delay time through the system. As a result, the position of the rotor is detected with high accuracy in the low-speed region to provide the more comfortable control and drive of the rotor, so that the rotor is controlled and driven to a further low rotational speed. The PWM frequencies are switched in two stages, which are the normal PWM frequency and the low-speed PWM frequency, with a simple circuit, so that a high cost of having a complex circuit is unnecessary.

According to another aspect of the disclosure, the driving apparatus of the sensorless brushless motor is provided with the low-speed transition threshold, which is set at a lower value compared to the low-speed relief threshold.

A hysteresis is provided for threshold settings on switching to and from between the low-speed transition threshold and the low-speed relief threshold, with the low-speed transition threshold being smaller value than the low-speed relief threshold, so that switching the PWM frequencies on a frequent basis is prevented when the rotor is rotating in a vicinity of a borderline between a normal-speed region and the low-speed region.

According to the further aspect of the disclosure, the driving apparatus of the sensorless brushless motor also includes the PWM generator circuit which provides a normal PWM frequency, which is the pulse width modulation frequency used in a normal state, and a high-speed PWM frequency with a higher frequency compared to the normal PWM frequency. The normal PWM frequency is switched to the high-speed PWM frequency when the one of the parameters is reached equal to and increased over a high-speed transition threshold, and the high-speed PWM frequency is switched to the normal PWM frequency when the one of the parameters is reached equal to and decreased under the high-speed relief threshold.

The PWM generator circuit switches the PWM frequency to and from between the normal PWM frequency and the high-speed PWM frequency according to the rotational speed of the rotor. When the rotational speed of the rotor is high, one cycle of the PWM frequency is made shorter with an usage of the high-speed PWM frequency, so that the on-duty period does not greatly change to a smaller value, so that the position detection circuit is provided with more timings to read the output of the comparator 34 to reduce delay in detecting the rotor position. As a result, the position of the rotor is detected with high accuracy in high-speed region to provide the more comfortable control and the drive of the rotor, so that the rotor is controlled and driven to a further high rotational speed. The PWM frequencies are switched in two stages, which are the normal PWM frequency and the high-speed PWM frequency with a simple circuit. The circuit for switching at the high-speed region when used together with the aforementioned circuit for switching at the low-speed region provides the switching circuit in three stages, which still is a simple circuit, thus a high cost of having a complex circuit is unnecessary.

According to another aspect of the disclosure, the driving apparatus of the sensorless brushless motor is provided with the high-speed transition threshold, which is set at a higher value compared to the high-speed relief threshold.

Another hysteresis is provided for threshold settings on switching to and from between the high-speed transition threshold and the high-speed relief threshold, with the high-speed transition threshold being larger value than the high-speed relief threshold, so that switching the PWM frequencies on a frequent basis is prevented when the rotor is rotating in a vicinity of a borderline between the normal-speed region and the high-speed region.

According to the further aspect of the disclosure, the driving apparatus of the sensorless brushless motor uses a falling phase of the pulse-width modulation signal of the PWM generator circuit to control a falling timing of the power supply voltage. The position detection circuit operates at the falling phase of the pulse-width modulation signal of the PWM generator circuit.

The PWM generator circuit controls a falling timing of the power supply voltage by the falling phase of the pulse-width modulation signal, and the position detection circuit operates at the falling phase of the pulse-width modulation signal. As a result, the position detection circuit may detect without a fail the rotor position from the induced voltage having the transmission delay time relative to the PWM signal and together with the effect of the PWM generator circuit switching the PWM frequencies, the drive and control range is increased to a wider range.

According to another aspect of the disclosure, the driving apparatus of the sensorless brushless motor is provided with the low-speed relief threshold which is set at a lower value compared to the high-speed relief threshold.

The low-speed relief threshold is set at the lower value compared to the high-speed relief threshold, so that the rotor is controlled in three stages of the normal-speed region, the low-speed region, and the high-speed region. The rotor is controlled and driven comfortably at both a low-speed range and a high-speed range with high accuracy, so that a wider range of control of the rotational speed may be provided. The PWM frequencies are switched at the thresholds to provide three different PWM frequencies, which are the normal PWM frequency, the low-speed PWM frequency, and the high-speed PWM frequency. Different frequencies are provided without effort and raising cost by changing the division ratio of the PWM frequencies with a frequency divider circuit.

According to the further aspect of the disclosure, the driving apparatus of the sensorless brushless motor is provided with the PWM generator circuit, which employs the normal PWM frequency when the one of the parameters is a value between the low-speed relief threshold and the high-speed relief threshold.

The PWM generator circuit employs the normal PWM frequency when the one of the parameters is the value between the low-speed relief threshold and the high-speed relief threshold, so that the rotor is controlled in three stages of the normal-speed region, the low-speed region, and the high-speed region. The rotor is controlled and driven comfortably at both the low-speed range and the high-speed range with high accuracy, so that a wider range of control of the rotational speed may be provided. The PWM frequencies are switched at the thresholds to provide three different PWM frequencies, which are the normal PWM frequency, the low-speed PWM frequency, and the high-speed PWM frequency. Different frequencies are provided without effort and raising cost by changing the division ratio of the PWM frequencies with the frequency divider circuit.

According to another aspect of the disclosure, the driving apparatus of sensorless brushless motor is provided with the low-speed PWM frequency, which is half the frequency of the normal PWM frequency.

When the rotational speed of the rotor is reduced, the PWM frequency is switched to the low-speed PWM frequency before reaching the limit of detection for the position of the rotor. When the low-speed PWM frequency with half the frequency of the normal PWM frequency is used, one cycle of the PWM signal is doubled. The on-duty period is doubled as well and thus the duty ratio is made to be equal to the duty ratio of the normal PWM frequency, so that the same rotational speed is achieved with the same effective value of the power supply voltage. As a result, the on-duty period on a position signal becomes two times longer. Making the on-duty period two times longer makes the position detection circuit to be able to read the position signal without a fail, as the time where the position signal is read coincides with the period when the position signal is in the high level at some time near the middle. As a result, the position of the rotor is detected with high accuracy in the low-speed region to provide the more comfortable control and the drive of the rotor, so that the rotor is controlled and driven to a further low rotational speed.

According to the further aspect of the disclosure, the driving apparatus of the sensorless brushless motor is provided with the high-speed PWM frequency, which is two times the frequency of the normal PWM frequency.

The PWM frequency is switched to the high-speed PWM frequency before a position detection error is increased to the point in which the control of driving the rotor becomes difficult. When the high-speed PWM frequency is two times that of the normal PWM frequency, one cycle of the PWM signal is halved. The on-duty period is halved as well and thus the duty ratio is made to be equal to the duty ratio of the normal PWM frequency, so that the same rotational speed is achieved with the same effective value of the power supply voltage. As a result, a number of times the position detection circuit reads the position signal is doubled, so that the delay on reading the change in the position signal becomes less, which result in the position detection error due to the delay in reading the position signal to be reduced. As a result, the rotational position of the rotor may be detected with higher accuracy at the high-speed range so that the control to drive the rotor becomes more comfortable at further high-speed ranges.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a configuration diagram describing a driving apparatus of a sensorless brushless motor as a whole according to a first embodiment;

Fig. 2 is a graph showing an example of a characteristic of a load when the motor is driven, also describing a threshold value used for controlling PWM frequencies to switch;

Fig. 3 is a flow chart for the PWM frequency control according to the first embodiment;

Fig. 4A is a graph showing waveforms describing whether the driving apparatus is capable of detecting a level change from low to high in a position signal of a position detection circuit at a low-speed range according to the first embodiment, which shows a limit of detection when a normal PWM frequency is used at the low-speed range;

Fig. 4B is a graph showing the waveforms describing whether the driving apparatus is capable of detecting the level change from low to high in the position signal of the position detection circuit at the low-speed range according to the first embodiment, which shows that a detection is capable when a low-speed PWM frequency is used at the low-speed range;

Fig. 4C is a graph showing the waveforms describing whether the driving apparatus is capable of detecting the level change from low to high in the position signal of theposition detection circuit at the low-speed range according to the first embodiment, which shows the limit of detection when the low-speed PWM frequency is used at the low-speed range;

Fig. 5A is a graph showing the waveforms describing a position detection error due to a delay on reading the position signal of the position detection circuit at a high-speed range according to the first embodiment, which shows the position detection error when the normal PWM frequency is used at the high-speed range;

Fig. 5B is a graph showing the waveforms describing a position detection error due to a delay on reading the position signal of the position detection circuit at a high-speed range according to the first embodiment, which shows that the position detection error is reduced when a high-speed PWM frequency is used at the high-speed range;

Fig. 6 is a configuration diagram describing the driving apparatus of the sensorless brushless motor as a whole according to a second embodiment;

Fig. 7 is a flow chart for the PWM frequency control according to the second embodiment; and

Fig. 8 is a configuration diagram describing the driving apparatus of the sensorless brushless motor as a whole according to a third embodiment.

### DETAILED DESCRIPTION

For the purpose of describing embodiments of a driving apparatus 1 of a sensorless brushless motor 9 according to this disclosure, a time length to supply a power supply voltage Vcc within one PWM frequency cycle is referred to as an on-duty period. The time length to supply the power supply voltage Vcc continuously to a predetermined phase with a multiple of on-duty period over a 120-degrees electrical angle or near that angle is referred to as an energized time zone. Normally, the on-duty period is extremely shorter than the energized time zone.

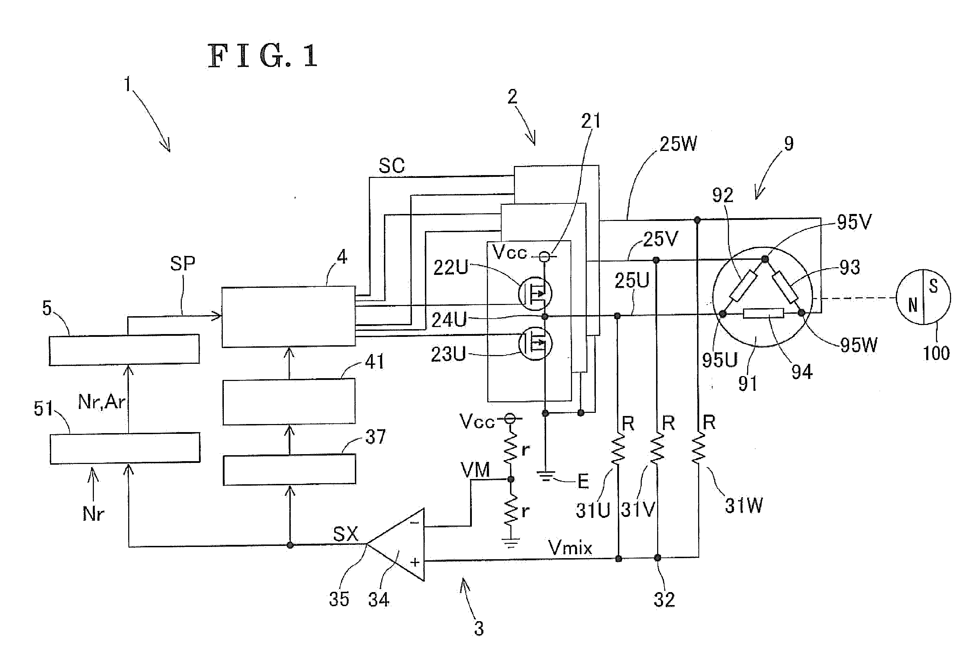

A configuration and a driving operation of the driving apparatus 1 of the sensorless brushless motor 9 according to a first embodiment will be described with reference to Figs. 1 to 5. The driving apparatus 1, whose configuration is illustrated in Fig. 1, actuates the sensorless brushless motor 9 by using an inverter circuit 2 in which a duty ratio of a power supply voltage is variable by means of a PWM (pulse-width modulation) method.

The sensorless brushless motor 9 is provided with a stator 91 including a UV armature winding 92, a VW armature winding 93 and a WU armature winding 94 (i.e., three phase armature windings) connected to one another in a delta connection and a rotor 100 including a pair of magnetic poles S, N, however, the sensorless brushless motor 9 does not include a sensor for detecting a rotational position of the rotor 100. The stator 91 includes a U-phase terminal 95U, a V-phase terminal 95V and a W-phase terminal 95W (i.e., three phase terminals). The UV armature winding 92 is connected to the U-phase terminal 95U and to the V-phase terminal 95V so as to be positioned between the U-phase terminal 95U and the V-phase terminal 95V, the VW armature winding 93 is connected to the V-phase terminal 95V and to the W-phase terminal 95W so as to be positioned between the V-phase terminal 95V and the W-phase terminal 95W, and the WU armature winding 94 is connected to the W-phase terminal 95W and to the U-phase terminal 95U so as to be positioned between the W-phase terminal 95W and the U-phase terminal 95U. According to the first embodiment, there is no limitation on the number of the three phase armature windings 92, 93, 94 of the stator 91 or the number of the pairs of magnetic poles S, N of the rotor 100.

The driving apparatus 1 is constituted by the inverter circuit 2, a position detection circuit 3, an inverter control circuit 4, an energizing phase switch setting circuit 41, a PWM generator circuit 5 and a rotational speed setting circuit 51. The inverter circuit 2 includes an input terminal 21 and a ground terminal E, to both of which a DC power supply is connected so that the power supply voltage Vcc is supplied to the inverter circuit 2.

The inverter circuit 2 is configured to include three phase bridges. With Fig. 1 as reference and taking the U-phase as an example to describe the configuration in detail, a power supply-side switching element 22U on U-phase and a ground-side switching element 23U on U-phase are serially connected to each other, and a U-phase output terminal 24U is interposed between the switching elements 22U, 23U. The V-phase and the W-phase are similarly configured. For each switching element 22U, 23U, a field effect transistor (FET), for example, may be used. Thus, the inverter circuit 2 is configured to controllably switch between a conducting state and a cutoff state in accordance with an energization control signal SC. The output terminal of each phase is connected to the three-phase terminals 95U, 95V, 95W of the stator 91 via power lines 25U, 25V, 25W, respectively.

Each of the U-phase terminal 95U, the V-phase terminal 95V and the W-phase terminal 95W of the stator 91 transits among three states in accordance with an opening and closing control of the respective switching elements 22U, 23U of the inverter circuit 2. The three states will be described in an example of the U-phase terminal 95U because the three states are identical among the U-, V- and W-phases. The U-phase terminal 95U is tied to the power supply voltage Vcc when the power supply-side switching element 22U on U-phase is in the conducting state and the ground-side switching element 23U on U-phase is in the cutoff state. The U-phase terminal 95U is tied to a zero voltage when the U-phase power supply-side switching element 22U is in the cutoff state and the U-phase ground-side switching element 23U is in the conducting state. The U-phase terminal 95U is in a high-impedance state when the power supply-side switching element 22U on the U-phase and the ground-side switching element 23U on the U-phase are in the cutoff state.

When the U-phase terminal 95U is in the high-impedance state, a U-phase induced voltage is generated at the U-phase terminal 95U. The U-phase induced voltage is generated by a magnetic flux from the pair of magnetic poles S, N of the rotor 100 interlinks with the UV armature winding 92 and with the WU armature winding 94 both of which are connected to the U-phase terminal 95U. Accordingly, the U-phase induced voltage changes depending on rotational positions of the UV armature winding 92 and the WU armature winding 94 relative to the rotor 100, and thus the U-phase induced voltage may be an index for detecting the rotational position of the rotor 100. The power supply-side switching element 22U on U-phase and the ground-side switching element 23U on U-phase are controlled not to be in the conducting state at the same time, thereby preventing a short-circuit failure of the power supply voltage.

The position detection circuit 3 is configured by three phase combined resistances 31 U, 31V, 31W, a comparator 34 and a position detecting portion 37. Resistance values R of the three phase combined resistances 31 U, 31V, 31 W are equal to one another. The combined resistances 31 U, 31V, 31W are positioned between the power lines 25U, 25V, 25W and a combined point 32, which is the common combined point among the combined resistances 31 U, 31V, 31W. In other words, the three phase combined resistances 31 U, 31V, 31W are connected to one another in a Y-connection and the combined point 32 serves as a neutral point of the Y-connection. The U-phase induced voltage, a V-phase induced voltage and a W-phase induced voltage are combined, and thus a composite voltage Vmix is generated at the combined point 32. The U-phase induced voltage, the V-phase induced voltage and the W-phase induced voltage are the induced voltages generated at the three phase terminals 95U, 95V, 95W of the stator 91, respectively. The combined point 32 is connected to a positive side input terminal + of the comparator 34, to which the composite voltage Vmix is inputted.

On the other hand, an intermediate level value VM (=Vcc/2) is inputted as a reference voltage to a negative side input terminal - of the comparator 34. The intermediate level value VM is obtained by dividing the power supply voltage Vcc of the DC power supply into two by means of two resistors whose resistance values r, r are equal to each other. The comparator 34 compares a magnitude of the composite voltage Vmix inputted to the positive side input terminal + of the comparator 34 relative to a magnitude of the intermediate level value VM inputted to the negative side input terminal - thereof, and outputs a position signal SX. In other words, the position signal SX is in a low level L in case that the composite voltage Vmix is smaller than the intermediate level value VM and the position signal SX is in a high level H in case that the composite voltage Vmix is equal to or greater than the intermediate level value VM at an output terminal 35 of the comparator 34. The output terminal 35 of the comparator 34 is connected to the position detecting portion 37 and to the rotational speed setting circuit 51, to which the position signal SX is inputted.

As will be described in detail later, the position detecting portion 37 operates at a falling phase of a pulse-width modulation signal SP for position detection. The position detecting portion 37 receives, as an input, the position signal SX of the comparator 34 and detects a reference rotational position of the rotor 100 at a timing of change between the high level H and the low level L of the position signal SX.

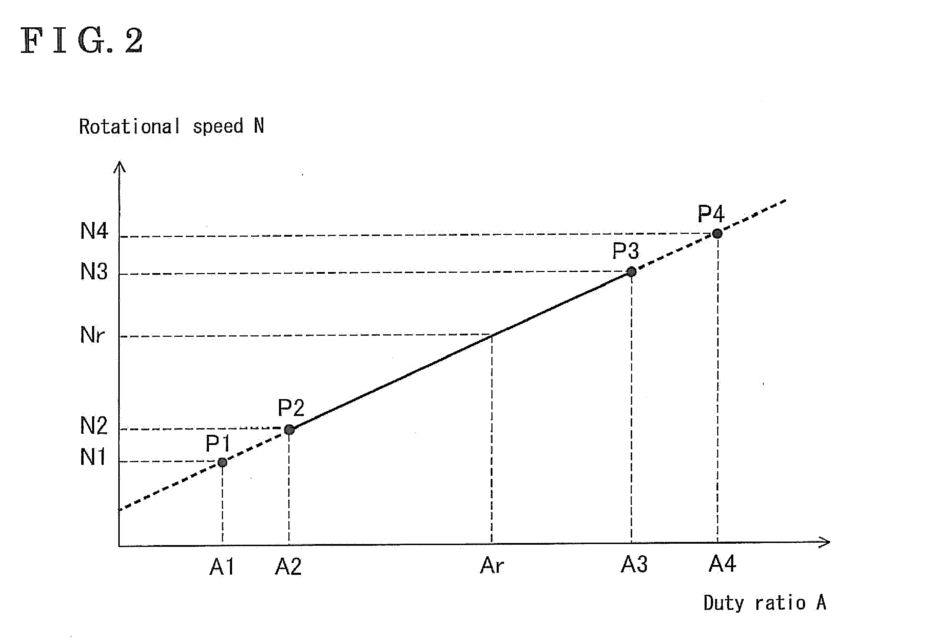

The rotational speed setting circuit 51 is a part of the PWM generator circuit 5. The rotational speed setting circuit 51 receives, as an input from an outside source, a commanded motor rotational speed value Nr (which serves as a commanded number of rotations of the motor). The rotational speed setting circuit 51 sets a commanded duty ratio value Ar (which serving as a commanded duty ratio) corresponding to the commanded motor rotational speed value Nr, based on a characteristic of a load when the motor is driven. Fig. 2 is a graph showing an example of a characteristic of a load when the motor is driven, also describing a threshold value used for controlling the PWM frequencies to switch. The horizontal axis of the graph represents a duty ratio A of the power supply voltage Vcc applied to the sensorless brushless motor 9, and the vertical axis of the graph represents a rotational speed N for driving a load. A diagonally right up characteristic line in Fig. 2 indicates that the rotational speed N increases with an increase of the duty ratio A, in other words with an increase of an effective value of the power supply voltage Vcc. The characteristic line in Fig. 2 is preliminarily provided in a memory of the rotational speed setting circuit 51 so that the rotational speed setting circuit 51 may determine the commanded duty ratio value Ar from the commanded motor rotational speed value Nr and outputs the values as commands to the PWM generator circuit 5.

The rotational speed setting circuit 51 receives, as an input from the position detection circuit 3, the position signal SX so that the rotational speed setting circuit 51 may determine the detected motor rotational speed value Nm (which serves as a detected number of rotations of the motor). When the commanded motor rotational speed value Nr and the detected motor rotational speed value Nm are different from each other, the rotational speed setting circuit 51 may request an appropriate commanded duty ratio value Ar so that the detected motor rotational speed value Nm to near the commanded motor rotational speed value Nr.

The PWM generator circuit 5 is a circuit that generates the PWM signal SP in a rectangular waveform, which may be switched to three different PWM frequencies, that is a normal PWM frequency fN used for normal-speed rotation of the rotor 100, a low-speed PWM frequency fL smaller than the normal PWM frequency fN, and a high-speed PWM frequency fH larger than the normal PWM frequency fN. Dividing a reference frequency having a high frequency, which does a crystal oscillator or similar means generate, by using a frequency divider circuit produces the PWM frequencies. Switching to three different frequencies is thus easily possible by changing a division ratio.

On the graph showing the characteristic of the load as shown in Fig. 2, four threshold points P1 to P4 are set for controlling the switching of the PWM frequencies. Each threshold point P1 to P4 is determined and set from the rotational speed N or the duty ratio A. In the first embodiment, threshold points P1 to P4 are determined from the rotational speed N and set as follows. As shown in Fig. 2, from the low rotational speed to the high rotational speed in order, the threshold point P1 is set as a low-speed transition threshold N1, the threshold point P2 is set as a low-speed relief threshold N2, the threshold point P3 is set as a high-speed relief threshold N3 and the threshold point P4 is set as a high-speed transition threshold N4. Each threshold N1 to N4 (threshold point P1 to P4) is determined in order to provide the most effective position detecting operation at low-speed rotation and at high-speed rotation, as will be described later.

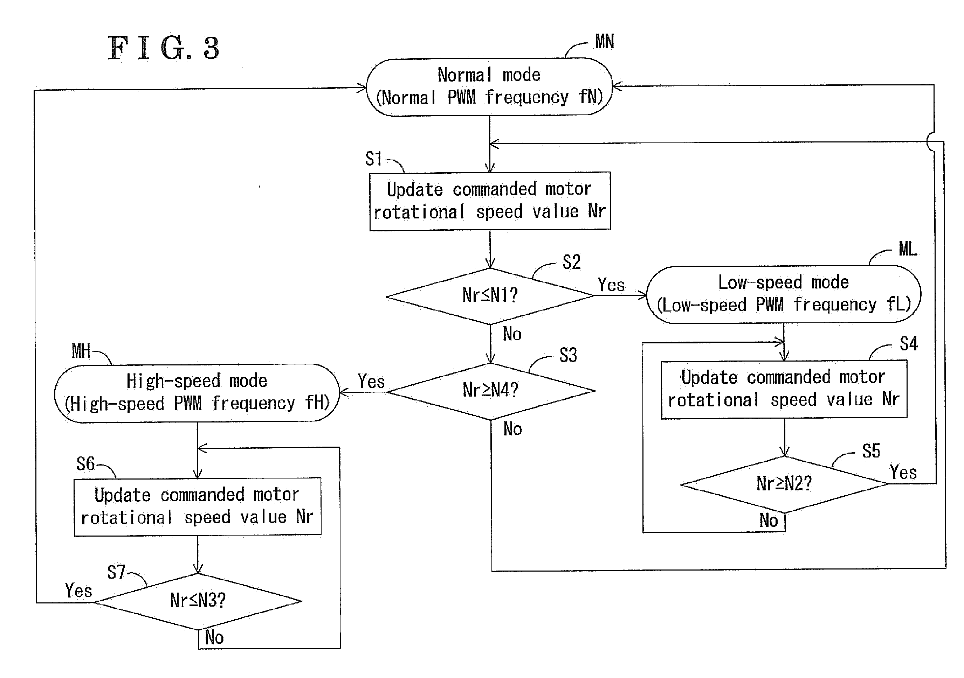

Based on a PWM frequency control flow shown in Fig. 3 and referring to the commanded motor rotational speed value Nr as a parameter, the PWM generator circuit 5 switches the PWM frequencies for use at the thresholds N1 to N4 (threshold points P1 to P4) as shown in Fig. 2. Referring to Fig. 3, when the commanded motor rotational speed value Nr is a value between the low-speed relief threshold N2 and the high-speed relief threshold N3, the PWM generator circuit 5 is in a normal mode MN and uses the normal PWM frequency fN. Then, in step S1, the PWM generator circuit 5 receives the commanded motor rotational speed value Nr in a predetermined interval for updating the value. In step S2, the most recent commanded motor rotational speed value Nr is judged to determine whether or not the value is equal to or less than the low-speed transition threshold N1. When the condition is satisfied, the PWM generator circuit 5 transits to the low-speed mode ML and switches the PWM frequency to the low-speed PWM frequency fL. When the condition is not satisfied, the procedure proceeds to a step S3. In the step S3, the commanded motor rotational speed value Nr is judged to determine whether or not the value is equal to or more than the high-speed transition threshold N4. When the condition is satisfied, the PWM generator circuit 5 transits to the high-speed mode MH and switches the PWM frequency to the high-speed PWM frequency fH. When neither conditions for the step 2 and the step 3 are satisfied, the PWM generator circuit 5 remains to be in the normal mode MN and repeats the procedures for the steps S1 to S3 by using the normal PWM frequency fN.

In a step S4, while using the low-speed PWM frequency fL in the low-speed mode ML, the PWM generator circuit 5 receives the commanded motor rotational speed value Nr for updating the value. In a following step S5, the most recent commanded motor rotational speed value Nr is judged to determine whether or not the value is equal to or more than the low-speed transition threshold N2. When the condition is satisfied, the PWM generator circuit 5 transits to the normal mode MN and switches the PWM frequency to the normal PWM frequency fN. When the condition is not satisfied, the PWM generator circuit 5 remains to be in the low-speed mode ML. Similarly in a step S6, while using the high-speed PWM frequency fH in the high-speed mode MH, the PWM generator circuit 5 receives the commanded motor rotational speed value Nr for updating the value. In a following step S7, the most recent commanded motor rotational speed value Nr is judged to determine whether or not the value is equal to or less than the high-speed transition threshold N3. When the condition is satisfied, the PWM generator circuit 5 transits to the normal mode MN and switches the PWM frequency to the normal PWM frequency fN. When the condition is not satisfied, the PWM generator circuit 5 remains to be in the high-speed mode MH.

To summarize, the PWM generator circuit 5 uses the low-speed PWM frequency fL when the commanded motor rotational speed value Nr is equal to or less than the low-speed transition threshold N1, uses the normal PWM frequency fN when the commanded motor rotational speed value Nr is between the low-speed relief threshold N2 and the high-speed relief threshold N3, and uses the high-speed PWM frequency fH when the commanded motor rotational speed value Nr is equal to or more than the high-speed transition threshold N4. The PWM generator circuit 5 continues to use the low-speed PWM frequency fL or the normal PWM frequency fN, whichever the PWM frequency used immediately before, when the commanded motor rotational speed value Nr is between the low-speed transition threshold N1 and the low-speed relief threshold N2, and continues to use the normal PWM frequency fN or the high-speed PWM frequency fH, whichever the PWM frequency used immediately before, when the commanded motor rotational speed value Nr is between the high-speed relief threshold N3 and the high-speed transition threshold N4. The PWM generator circuit 5 uses any one of the normal PWM frequency fN, the low-speed PWM frequency fL or the high-speed PWM frequency fH, and generates and outputs the PWM signal SP having a rectangular waveform and satisfying the commanded duty ratio value Ar to the inverter control circuit 4.

The energizing phase switch setting circuit 41 is a part of the inverter control circuit 4. Based on a received signal on the reference position of the rotor 100, which is detected by the position detection portion 37 of the position detection circuit 3, the energizing phase switch setting circuit 41 determines and sends a signal on when to energize the U-phase terminal 95U, the V-phase terminal 95V, and the W-phase terminal 95W to switch phase in 120-degrees electrical angle pitch to the inverter control circuit 4.

The inverter control circuit 4 receives the PWM signal SP from the PWM generator circuit 5 and the signal on the timing to switch an energizing phase from the energizing phase switch setting circuit 41. Based on the received signals, the inverter control circuit 4, determines and sends the energization control signal SC to control opening and closing of the switching elements 22U, 23U on U-phase and the switching elements similarly on V-phase and W-phase, so as to control the energized time zone and the on-duty period for the U-phase terminal 95U, the V-phase terminal 95V and the W-phase terminal 95W.

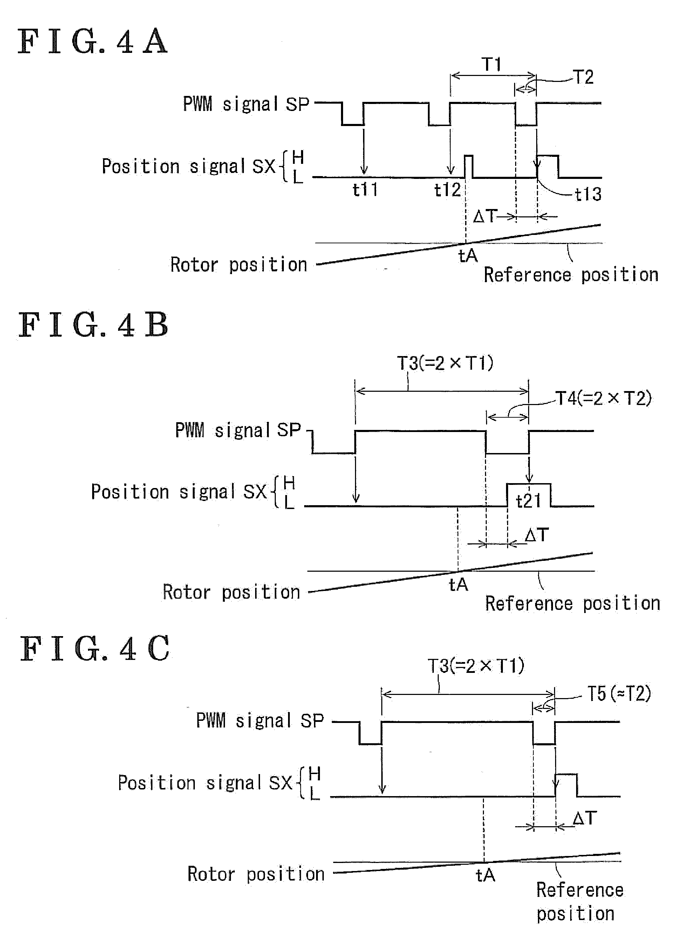

Next, operations of the driving apparatus 1 of the sensorless brushless motor 9 according to the configuration of the first embodiment is described separately for a low-speed rotation occasion and for a high-speed rotation occasion. Figs. 4A to 4C are the graphs showing waveforms describing whether the driving apparatus 1 according to the first embodiment is capable of detecting a level change from low to high in the position signal SX of the position detection circuit 3 at a low-speed range. Fig. 4A shows a limit of detection when the normal PWM frequency fN is used at the low-speed range, Fig. 4B shows that detection is possible when the low-speed PWM frequency is used at the low-speed range, and Fig. 4C shows the limit of detection when the low-speed PWM frequency fL is used at the low-speed range. In each of Figs. 4A to 4C, a top graph shows the waveform of the PWM signal SP, a middle graph shows the waveform of the position signal SX, and a bottom graph shows a rotor position, that is a rotational position of the rotor 100. Horizontal axes indicating an elapsed time are shared between the aforementioned three graphs. The PWM signals SP in Figs. 4A to 4C have a negative logic. As a result, low levels indicate the on-duty period where the power supply voltage Vcc is applied to any one of the U-phase terminal 95U, the V-phase terminal 95V, and the W-phase terminal 95W.

Fig. 4A is a situation when the driving apparatus 1 of the sensorless brushless motor 9 uses the normal PWM frequency fN at the low-speed range. The PWM signal SP has a cycle T1, an on-duty period T2, and a first low-speed duty ratio AL1, which is an equal to T2/T1. The position detection circuit 3 operates and reads the position signal SX at the falling phase (a rising phase in a negative logic waveform) in a predetermined phase of the PWM signal SP, that is, each on-duty completion time t11, t12, t13, that is the time of completion of the on-duty period T2, which is indicated as downward arrows in Fig. 4A. The position signal SX outputs the signal on the on-duty period, which is delayed by an amount of delay ΔT relative to the PWM signal SP. The amount of delay is a delay that occurs due to a signal being transmitted through the inverter control circuit 4, the inverter circuit 2, the comparator 34 and the like, which may be determined as an almost constant amount based on a circuit configuration. The rotor position graph shows that the rotor 100 passes the reference position at a time tA, which indicates the position signal SX is in the high level H at the on-duty period after the time tA.

Fig. 4A indicates that the on-duty completion time t13, which is the timing the position detection circuit 3 reads the position signal SX, almost coincides with a starting point of the high level H of the position signal SX. As a result, when the on-duty period T2 is shortened, that is when the first low-speed duty ratio AL1 is controlled to a smaller value, detection of the position signal becomes impossible. The reason is because the on-duty period of the position signal SX as a whole is delayed after the on-duty completion time t13 where the timing for reading the position signal SX does not exist. In other words, Fig. 4A shows the limit of detection for the position of the rotor 100 when the driving apparatus 1 of the sensorless brushless motor 9 uses the normal PWM frequency fN and the amount of delay ΔT almost equals the on-duty period. In other words, further shortening the on-duty period T2 to control the rotor 100 to further low-speed rotation is difficult. The aforementioned limit is the limit of detection as well in a conventional driving apparatus using a constant PWM frequency comparable to the normal PWM frequency fN.

When the rotational speed of the rotor 100 is reduced, the first embodiment in this disclosure switches the PWM frequency to the low-speed PWM frequency fL before reaching the limit of detection, as shown in Fig. 4A. Supposing that the low-speed PWM frequency fL is half that of the normal PWM frequency fN, a cycle T3 of the PWM signal SP is doubled (i.e. T3 = 2 x T1). As shown in Fig. 4B, when an on-duty period T4 is doubled as well (i.e. T4 = 2 x T2), the duty ratio A is made to be equal to the first low-speed duty ratio AL1, so that the same rotational speed is achieved with the same effective value of the power supply voltage Vcc. As a result, the on-duty period on the position signal SX becomes two times longer. Making the on-duty period T4 two times longer makes the position detection circuit 3 to be able to read the position signal SX without a fail, as the on-duty completion time t21, where the position signal SX is read, which is indicated as a downward arrow in Fig. 4B, coincides with the period when the position signal SX is in the high level H at some time near the middle.

As shown in Fig. 4C, when the driving apparatus 1 of the sensorless brushless motor 9 uses the low-speed PWM frequency fL and the PWM signal SP is having the cycle T3 (= 2 x T1), the limit of detection is when the on-duty period T5 almost equal to the amount of delay ΔT (≈ T2), where the duty ratio A is a second low-speed duty ratio AL2, which equals (T5/T3)≈AL1x(1/2) in equation, so that a control of the rotor 100 to further low-speed rotation becomes possible. In other words, when the low-speed PWM frequency fL is 1/k times that of the normal PWM frequency fN, the rotor 100 may be controlled to further low-speed rotation up to having almost 1/k times duty ratio A.

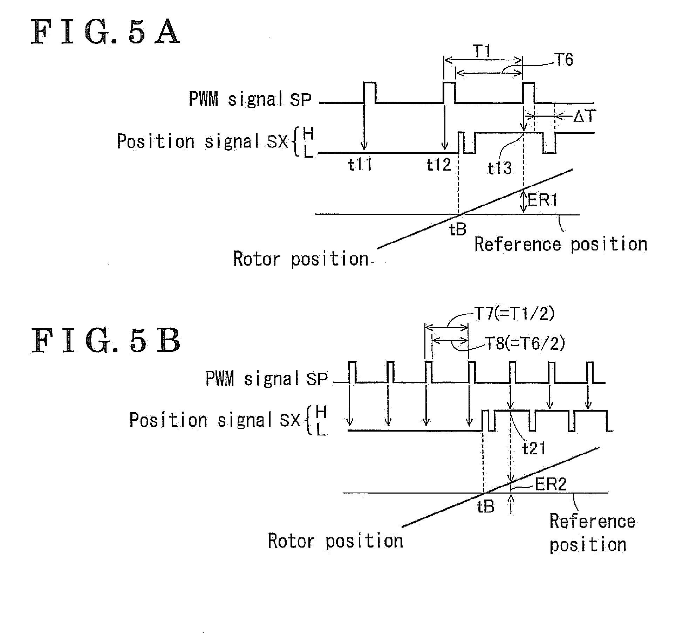

Figs. 5A, 5B are graphs showing the waveforms describing position detection errors ER1, ER2 due to a delay on reading the position signal SX of the position detection circuit 3 at a high-speed range according to the first embodiment. Fig. 5A shows the position detection error E1 when the normal PWM frequency fN is used at the high-speed range, and Fig. 5B shows that the position detection error E2 is reduced when a high-speed PWM frequency fH is used at the high-speed range. In each of Figs. 5A and 5B, a top graph shows the waveform of the PWM signal SP, a middle graph shows the waveform of the position signal SX, and a bottom graph shows the rotor position, that is the rotational position of the rotor 100. Horizontal axes indicating an elapsed time are shared between the aforementioned two graphs. As with Figs. 4A to 4C, the PWM signals SP in Figs. 5A and 4B have a negative logic. As a result, low levels indicate the on-duty period where the power supply voltage Vcc is applied to any one of the U-phase terminal 95U, the V-phase terminal 95V, and the W-phase terminal 95W.

In Fig. 5A, the driving apparatus 1 of the sensorless brushless motor 9 uses the normal PWM frequency fN at the high-speed range. The PWM signal SP has the cycle T1, an on-duty period T6, and a first high-speed duty ratio AH1, which is an equal to T6/T1. The position detection circuit 3 operates and reads the position signal SX at each on-duty completion time t11, t12, t13, that is the time of completion of the on-duty period T6, which is indicated as downward arrows in Fig. 4A. The position signal SX outputs the signal on the on-duty period, which is delayed by an amount of delay ΔT relative to the PWM signal SP. The rotor position graph shows that the rotor 100 passes the reference position at a time tB, which indicates that the position signal SX is in the high level H at the on-duty period after the time tB.

Fig. 5A indicates that the position detection circuit 3 detects the low level L of the position signal SX at each on-duty completion time t11 and t12, and detects the high level H of the position signal SX at the on-duty completion time t13. The position detection circuit 3 detects that the rotor 100 has reached the reference position at the on-duty completion times t13. Due to the delay from the time tB, the detected rotational position includes the position detection error ER1. An amount of the position detection error ER1 becomes greater at higher rotation speeds, which makes the control of driving the rotor 100 at high-speed difficult.

The first embodiment in this disclosure switches the PWM frequency to the high-speed PWM frequency fH before the position detection error ER1 is increased to the point in which the control of driving the rotor 100 becomes difficult. Supposing that the high-speed PWM frequency fH is two times that of the normal PWM frequency fN, a cycle T7 of the PWM signal SP is halved (i.e. T7 = T1/2). As shown in Fig. 5B, when an on-duty period T8 is halved as well (i.e. T8 = T6/2), the duty ratio A is made to be equal to the first high-speed duty ratio AH1, so that the same rotational speed is achieved with the same effective value of the power supply voltage Vcc. As a result, a number of times the position detection circuit 3 reads the position signal SX is doubled, so that the delay from the time tB becomes short on reading the change in the position signal SX at the on-duty completion time t21. As a result, the position detection error ER2 is reduced compared to the situation described in Fig. 5A. The rotational position of the rotor 100 may be detected with higher accuracy at the high-speed range so that the control to drive the rotor 100 becomes more comfortable to further high-speed range.

As described, the driving apparatus 1 according to the first embodiment disclosed here controls and drives the rotor 100 comfortably at both low-speed range and high-speed range with high accuracy, so that a wider range of control of the rotational speed may be provided. The PWM frequencies are switched in three stages, which are normal, low-speed, and high-speed without effort and raising cost by changing the division ratio in the frequency divider circuit. In addition, a hysteresis is provided for threshold settings on switching the PWM frequencies SP between the low-speed transition threshold N1 and the low-speed relief threshold N2, and another hysteresis is provided also between the high-speed transition threshold N4 and the high-speed relief threshold N3, which prevents from switching the PWM frequencies SP on a frequent basis when the rotor 100 is rotating in a vicinity of a borderline for switching the PWM frequencies SP.

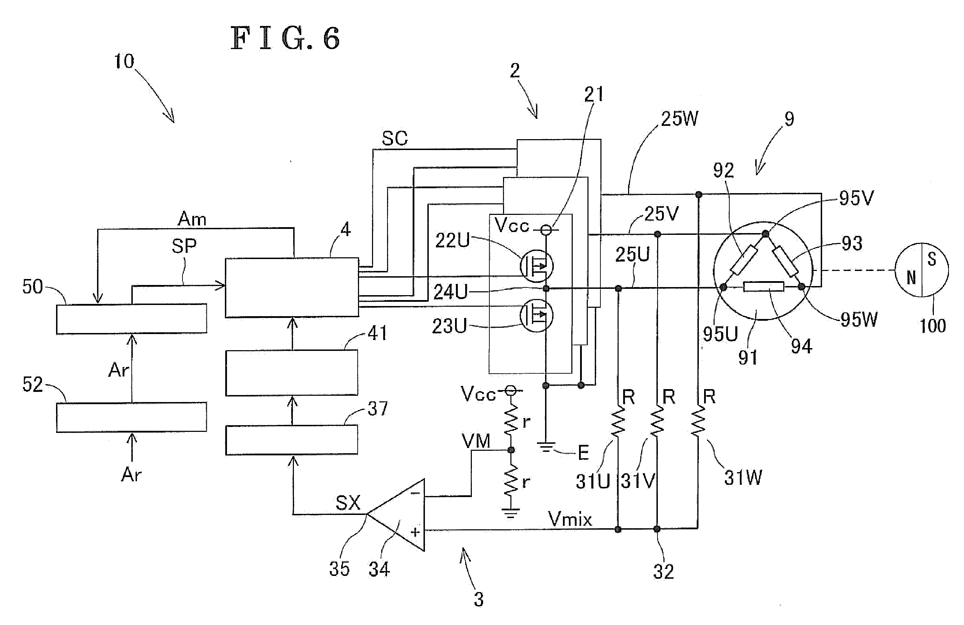

Next, the driving apparatus of the sensorless brushless motor according to a second embodiment, which switches the PWM frequencies using a detected duty ratio value Am (serves as a detected duty ratio) as a parameter, will be described mainly on differences between the first embodiment. Fig. 6 is a configuration diagram describing the driving apparatus 10 of the sensorless brushless motor as a whole according to a second embodiment. The second embodiment differs from the first embodiment in two points, as a comparison of Fig. 6 with Fig. 1 shows. First, the second embodiment includes a duty ratio setting circuit 52 instead of the rotational speed setting circuit 51. Second, in the second embodiment, the inverter control circuit 4 determines the detected duty ratio value Am of the energization control signal SC and feeds back to the PWM generator circuit 50.

The duty ratio setting circuit 52 is a part of the PWM generator circuit 5 configuration. The duty ratio setting circuit 52 receives a command signal, the commanded duty ratio value Ar, from an outside source and outputs a converted form of the commanded duty ratio value Ar to the PWM generator circuit 50.

The PWM generator circuit 50 is a circuit that generates the PWM signals SP with a rectangular waveform and switches the PWM frequencies in three stages, which are the normal PWM frequency fN, the low-speed PWM frequency fL, and the high-speed PWM frequency fH. The second embodiment uses the duty ratios A for the predetermined threshold points P1 to P4 shown in Fig. 2. The duty ratio A for each threshold is, in the order of a smaller value to a larger value, a low-speed transition threshold A1 (for the threshold point P1), a low-speed relief threshold A2 (for the threshold point P2), a high-speed relief threshold A3 (for the threshold point P3) and a high-speed transition threshold A4 (for the threshold point P4).

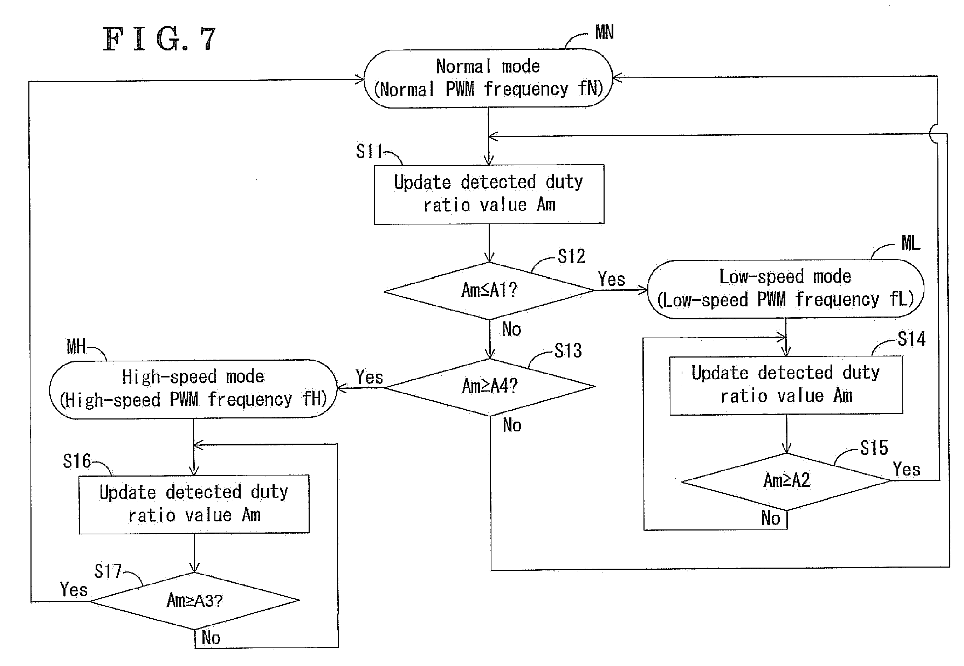

The PWM generator circuit 50 bases a PWM frequency control flow shown in Fig. 7 and referring to the detected duty ratio value Am as the parameter, switches the PWM frequencies to use at the thresholds A1 to A4 (threshold points P1 to P4). The PWM frequency control flow in Fig. 7 is similar to that of Fig. 3, and the description will be simplified. The PWM generator circuit 50 in a normal mode MN uses the normal PWM frequency fN and updates the detected duty ratio value Am in a step S11. In the following step S12, when the detected duty ratio value Am is equal to or less than the low-speed transition threshold A1 the PWM generator circuit 50 transits to the low-speed mode ML and switches the PWM frequency to the low-speed PWM frequency fL. Then, in a step S13, when the detected duty ratio value Am is equal to or more than the high-speed transition threshold A4, the PWM generator circuit 50 transits to the high-speed mode MH and switches the PWM frequency to the low-speed PWM frequency fH. When neither conditions for the step 12 and the step 13 are satisfied, the PWM generator circuit 5 remains to be in the normal mode MN and repeats the procedures for the steps S1 to S3 by using the normal PWM frequency fN.

While using the low-speed PWM frequency fL in the low-speed mode ML in steps S4 and S5, the PWM generator circuit 5 transits to the normal mode MN and switches the PWM frequency to the normal PWM frequency fN when the detected duty ratio value Am is equal to or more than the low-speed relief threshold A2. When the condition is not satisfied, the PWM generator circuit 50 remains to be in the low-speed mode ML. While using the high-speed PWM frequency fH in the high-speed mode MH in steps S16 and S17, the PWM generator circuit 50 transits to the normal mode MN and switches the PWM frequency to the normal PWM frequency fN when the detected duty ratio value Am is equal to or less than the low-speed relief threshold A3. When the condition is not satisfied, the PWM generator circuit 50 remains to be in the high-speed mode MH.

As described, the driving apparatus 10 of the sensorless brushless motor 9 according to the second embodiment disclosed here controls and switches the PWM frequencies to provide effects of the rotor position detection at both low-speed range and high-speed range similar to the effects of the first embodiment described in Figs. 4 and 5, so that a wider range of control of the rotational speed may be provided.

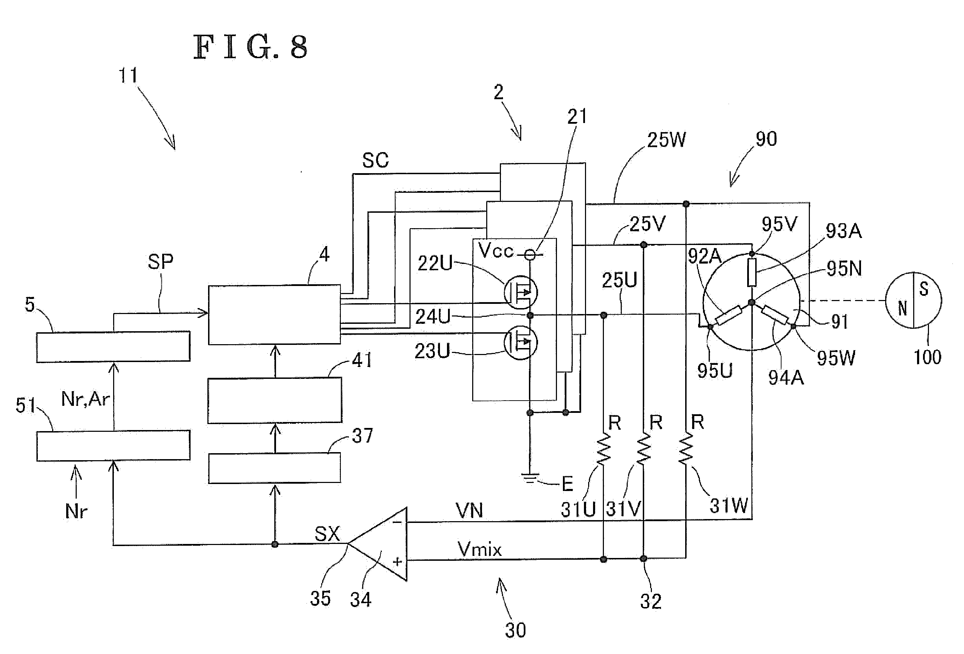

Next, the driving apparatus of the sensorless brushless motor according to a third embodiment with a sensorless brushless motor 90 in a different configuration of armature windings 92A, 93A, 94A and with the comparator 34 using different reference voltage. Fig. 8 is a configuration diagram describing a driving apparatus 11 of the sensorless brushless motor as a whole according to the third embodiment. As shown in Fig. 8, according to the third embodiment, a U-phase armature winding 92A, a V-phase armature winding 93A and a W-phase armature winding 94 (i.e., three phase armature windings) are connected to one another in a Y-connection. In other words, the U-phase armature winding 92A is connected between the U-phase terminal 95U and a neutral point 95N, and likewise, the V-phase armature winding 93A is connected between the V-phase terminal 95V and the neutral point 95N, and the W-phase armature winding 94A is connected between the W-phase terminal 95W and the neutral point 95N. The neutral point 95N is connected to the comparator 34 at the negative side input terminal -, which is outside of the sensorless brushless motor 90. As a result, a neutral point voltage VN from the armature windings connected in a Y-connection is the reference voltage for the comparator 34. Aside from the aforementioned characteristics described for the third embodiment, the rest of the third embodiment is the same with the first embodiment.

In the third embodiment, supposing that the U-phase terminal 95U is in a high-impedance state, the V-phase terminal 95V is tied to a zero voltage, and the W-phase terminal 95W is in a PWM controlled state, the power supply voltage Vcc is supplied between the W-phase terminal 95W and the V-phase terminal 95V. In other words, the W-phase armature winding 94A and the V-phase armature winding 93A are energized and the neutral point voltage VN generated at the neutral point 95N is half that of the power supply voltage Vcc, which corresponds to the intermediate level value VM. The operation of the driving apparatus 11 according to the third embodiment is nearly the same with the operation of the driving apparatus 1 according to the first embodiment, and the effect is similar likewise, thus the detailed description is omitted.

Further, the configuration as a whole of the second embodiment may be provided with the sensorless brushless motor 9 having the delta connection replaced with the sensorless brushless motor 90 having the Y-connection, and use the neutral point voltage VN for the reference voltage of the comparator 34.

Furthermore, as the parameter for switching the PWM frequencies, instead of using the aforementioned commanded motor rotational speed value Nr or the detected duty ratio value Am, the detected motor rotational speed value Nm or the commanded duty ratio value Ar may be used. Still further, each embodiment is described as having three stages of the PWM frequencies, however, stages may be increased to four or more to switch the frequencies in further divided ranges. Even when the stages are conversely decreased to two, that is to the normal stage and the low-speed stage or to the normal stage and the high-speed stage, increase in the drive and control range to a wider range is provided.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving apparatus (1, 10, 11) of a sensorless brushless motor (9, 90), comprising:
an inverter circuit (2) supplying a power supply voltage (Vcc), of which duty ratios (A) is variably controlled by a pulse-width modulation method, to three-phase terminals (95U, 95V, 95W) of three-phase armature windings (92, 93, 94, 92A, 93A, 94A) of the sensorless brushless motor (9, 90) provided with a stator (91) including the three-phase armature windings (92, 93, 94, 92A, 93A, 94A) and with a rotor (100) including a pair of magnetic poles (S, N);
a PWM generator circuit (5, 50) generating a pulse-width modulation signal (SP) including the duty ratio (A) corresponding to a commanded duty ratio (Ar) or corresponding to a commanded number of rotations of the motor (Nr);
a position detection circuit (3, 30) operating at a predetermined phase of the pulse-width modulation signal (SP), detecting an induced voltage induced at the three-phase terminals (95U, 95V, 95W) in a non-energization time zone in which the power supply voltage (Vcc) is not supplied from the inverter circuit (2) to the three phase terminals (95U, 95V, 95W) and detecting a rotational position of the rotor (100) on the basis of the induced voltages; and
an inverter control circuit (4) determining an energization time zone in which the power supply voltage (Vcc) is supplied to each of the three-phase terminals (95U, 95V, 95W) on the basis of the rotational position of the rotor (100) detected by the position detection circuit (3, 30) and transmitting an energization control signal (SC) which is determined on the basis of a setting of the energization time zone and of the pulse-width modulation signal (SP) to the inverter circuit (2), wherein
the PWM generator circuit (5, 50) provides a stepwise increase and decrease of a pulse-width modulation frequency in response to an increase and decrease of one of following parameters; the commanded duty ratio (Ar), the commanded number of rotations of the motor (Nr), a detected duty ratio (Am), and a detected number of rotations of the motor (Nm).

2. The driving apparatus (1, 10, 11) of the sensorless brushless motor (9, 90) according to Claim 1, where the PWM generator circuit (5, 50) provides a normal PWM frequency (fN), which is the pulse width modulation frequency used in a normal state, and a low-speed PWM frequency (fL) with a lower frequency compared to the normal PWM frequency (fN), and wherein the normal PWM frequency (fN) is switched to the low-speed PWM frequency (fL) when the one of the parameters is reached equal to and decreased under a low-speed transition threshold (A1, N1), and the low-speed PWM frequency (fL) is switched to the normal PWM frequency (fN) when the one of the parameters is reached equal to and increased over a low-speed relief threshold (A2, N2).

3. The driving apparatus (1, 10, 11) of the sensorless brushless motor (9, 90) according to Claim 2, wherein the low-speed transition threshold (A1, N1) is set at a lower value compared to the low-speed relief threshold (A2, N2).

4. The driving apparatus (1, 10, 11) of the sensorless brushless motor (9, 90) according to any one of Claims 1 through 3, wherein the PWM generator circuit (5, 50) provides a normal PWM frequency (fN), which is the pulse width modulation frequency used in a normal state, and a high-speed PWM frequency (fH) with a higher frequency compared to the normal PWM frequency (fN), and wherein the normal PWM frequency (fN) is switched to the high-speed PWM frequency (fH) when the one of the parameters is reached equal to and increased over a high-speed transition threshold (A4, N4), and the high-speed PWM frequency (fH) is switched to the normal PWM frequency (fN) when the one of the parameters is reached equal to and decreased under the high-speed relief threshold (A3, N4).

5. The driving apparatus (1, 10, 11) of the sensorless brushless motor (9, 90) according to Claim 4, wherein the high-speed transition threshold (A4, N4) is set at a higher value compared to the high-speed relief threshold (A3, N3).

6. The driving apparatus (1, 10, 11) of the sensorless brushless motor (9, 90) according to any one of Claims 1 through 5, wherein
a falling phase of the pulse-width modulation signal (SP) of the PWM generator circuit (5, 50) controls a falling timing of the power supply voltage (Vcc), and
the position detection circuit (3, 30) operates at the falling phase of the pulse-width modulation signal (SP) of the PWM generator circuit (5, 50).

7. The driving apparatus (1, 10, 11) of the sensorless brushless motor (9, 90) according to any one of Claims 2 through 5, wherein the low-speed relief threshold (A2, N2) is set at a lower value compared to the high-speed relief threshold (A3, N3).

8. The driving apparatus (1, 10, 11) of the sensorless brushless motor (9, 90) according to any one of Claims 2 through 7, wherein the PWM generator circuit (5, 50) employs the normal PWM frequency (fN) when the one of the parameters is a value between the low-speed relief threshold (A2, N2) and the high-speed relief threshold (A3, N3).

9. The driving apparatus (1, 10, 11) of sensorless brushless motor (9, 90) according to either one of Claims 2 or 3, wherein the low-speed PWM frequency (fL) is half the frequency of the normal PWM frequency (fN).

10. The driving apparatus (1, 10, 11) of the sensorless brushless motor (9, 90) according to either one of Claims 4 or 5, wherein the high-speed PWM frequency (fH) is two times the frequency of the normal PWM frequency (fN).
